(19) **Europäisches Patentamt**

**European Patent Office**

**Office européen des brevets**

(11) Veröffentlichungsnummer: **0 457 147 B1**

(12) **EUROPÄISCHE PATENTSCHRIFT**

(45) Veröffentlichungstag der Patentschrift: **14.06.95**

(51) Int. Cl.6: **C08L 33/10**, C08L 25/12, C08L 25/16

(21) Anmeldenummer: **91107295.7**

(22) Anmeldetag: **06.05.91**

(54) **Polymermischungen.**

(30) Priorität: **18.05.90 DE 4016011**

(43) Veröffentlichungstag der Anmeldung:
**21.11.91 Patentblatt 91/47**

(45) Bekanntmachung des Hinweises auf die
Patenterteilung:
**14.06.95 Patentblatt 95/24**

(84) Benannte Vertragsstaaten:
**AT BE CH DE DK ES FR GB IT LI NL SE**

(56) Entgegenhaltungen:
**EP-A- 0 082 833**
**EP-A- 0 194 384**
**DE-A- 1 950 599**

(73) Patentinhaber: **RÖHM GMBH**
**Kirschenallee**
**D-64293 Darmstadt (DE)**

(72) Erfinder: **Fischer, Jens-Dieter, Dr.**
**Ernst-Ludwig-Weg 44**
**W-6101 Bickenbach (DE)**
Erfinder: **Rhein, Thomas, Dr.**
**Talstrasse 79**
**W-6501 Stadecken-Elsheim (DE)**
Erfinder: **Stickler, Manfred, Dr.**
**Grenzweg 17B**
**W-6104 Seeheim-Jugenheim (DE)**

## Beschreibung

Gebiet der Erfindung

Die Erfindung betrifft Polymermischungen, deren eine Komponente Copolymerisate von Alkyl(meth)-acrylaten, mit Maleinsäureanhydrid und mit gegebenenfalls substituierten Vinylaromaten, deren andere Komponente Copolymerisate aus gegebenenfalls substituiertem Styrol und/oder α-Methylstyrol und Acrylnitril bzw. Methacrylnitril darstellen.

Stand der Technik

Der Werkstoff Polymethylmethacrylat (PMMA) weist bei allen wertvollen Eigenschaften, die ihn als Thermoplast auszeichnen, wie z.B. Transparenz und hohe Witterungsbeständigkeit, gute Verarbeitbarkeit etc. doch auch Schwächen auf, wie z.B. eine relativ große Tendenz zur Wasseraufnahme und eine nicht sämtlichen Ansprüchen genügende Schlagzähigkeit. Die Wasseraufnahme von PMMA liegt unter Sättigungsbedingungen (23 Grad C) bei 2 Gew.-%. Zur Reduzierung der Wasseraufnahme bietet sich zunächt Copolymerisation mit hydrophoben Monomeren wie z.B. Vinylaromaten an. In der EP-A 268 040 werden z.B. verträgliche Polymermischungen beschrieben, die aus Cyclohexyl(meth)acrylat-haltigen Acrylatcopolymeren einerseits und α-Methylstyrol-haltigen Polymeren mit gegebenenfalls Anteilen von Acrylnitril oder Maleinsäureanhydrid bestehen, die sich durch hohe Transparenz auszeichnen.

Allerdings garantiert die Copolymerisation von Vinylaromaten nicht in jedem Fall eine Senkung der Wasseraufnahme. Messungen zeigen, daß bei dem Copolymeren aus Methylmethacrylat, Styrol und Maleinsäureanhydrid im Verhältnis 75 : 15 : 10 Gew.-Teile (Handelsprodukte PLEXIGLAS [R] HW55) der Sättigungswert der Wasseraufnahme bei 4 Gew.-% liegt. Eine Wasseraufnahme in dieser Größenordnung kann sich bei relativ extremen Trocken-Feucht-Wechselbeanspruchungen, wie sie bei der Freibewitterung auftreten können, nachteilig auswirken. Formkörper aus diesen Polymerisaten zeigen Spannungsriß-Korrosion.

Schon seit längerer Zeit wird auch das Konzept verfolgt, die Schlagzähigkeit von Thermoplasten wie PMMA durch Abmischen mit elastomeren Polymerisaten zu verbessern. Limitierend für die Option bei der Abmischung wirkt sich die Forderung nach Transparenz der so erhaltenen Werkstoffe aus. Aus den Druckschriften DE-A 28 28 517 und DE 20 45 742 sind Polymermischungen bekannt aus PMMA, Styrol-Acrylnitril-Copolymeren im Gewichtsverhältnis (78 - 88) : (22 - 12) und Acrylnitril-Butadien-Styrol-Copolymerisaten (ABS). Anstelle des PMMA können auch Copolymerisate des Methylmethacrylats mit Alkylmethacrylat als Abmischkomponenten eingesetzt werden.

Andere thermoplastische Formmassen mit komplexem Aufbau sind z.B. aus der DE-A 36 01 423 bekannt. Sie enthalten 25 - 60 Gew.-% Polycarbonat, 5 - 40 Gew.-% Polyalkylenterephthalat, 2 - 30 Gew.-% gepfropften Rubber und Copolymere aus 10 - 90 Gew.-% (Methyl)styrol mit 90 - 10 Gew.-% (Meth)-acrylsäure, -ester oder -nitril Maleinsäureanhydrid bzw. -imid und/oder Glycidylmethacrylat.

Eine andere Möglichkeit stellen Mischungen aus 1 - 99 Gew.-% eines Copolymers mit den Komponenten Methylmethacrylat, Maleinsäureanhydrid und einem aromatischen Vinylmonomeren und 99 - 1 Gew.-% eines Copolymeren aus 80 - 100 Gew.-% Methylmethacrylat mit 0 - 20 Gew.-% eines ethylenischen Monomeren dar (EP-A 113 105).

In EP-A 194 384 werden verträgliche Mischungen aus Methylmethacrylat-N-Arylmaleinimid-Styrol-Terpolymerisaten und Styrol-Acrylnitril-Copolymerisaten beschrieben, die aufgrund des Gelbstichs der Terpolymerisat-Komponente ebenfalls einen Gelbstich aufweisen, der für viele Formmassen-Anwendungsgebiete, wie beispielsweise lampengehäuse, prohibitiv ist.

Einen Hinweis auf verträgliche Mischungssysteme auf Basis von Styrol-Acrylnitrilcopolymeren gibt die Arbeit von R.A. Mendelson [J. Polym. Sci., Polym. Phys. Ed. 23 (10) 1975 - 1995 (1985)], derzufolge die Mischbarkeit bzw. die Incompatibilität von Maleinsäureanhydrid-MMA-Styrolcopolymeren mit SAN-Copolymeren vom relativen Maleinsäureanhydrid-Gehalt einerseits und vom Acrylnitrilgehalt andererseits abhängig ist. Dieser Arbeit sind aber lediglich verträgliche Mischungssysteme aus Styrol-MMA-Maleinsäureanhydrid-Copolymeren mit einem Styrolgehalt oberhalb 50 Gew.-% und Styrol-Acrylnitril-Copolymere mit einem Styrolgehalt zwischen 90 und 40 Gew.-% zu entnehmen, so daß die Annahme berechtigt erschien, die Kompatibilität beruhe auf dem hohen Styrolanteil der Komponenten.

EP 0 457 147 B1

Aufgabe und Lösung

Der Wunsch der Technik nach thermoplastisch verarbeitbaren Werkstoffen, die hervorragende mechanische Eigenschaften mit sehr guten optischen Eigenschaften verbinden, kann durch die Möglichkeiten, die der Stand der Technik bietet nur bedingt befriedigt werden. Die Werkstoffe sollten nach Möglichkeit

- hohe Fließfähigkeit bei der Verarbeitung
- hohe Schlagzähigkeit und Kerbschlagzähigkeit
- Transparenz bzw. ein Minimum an Haze und
- geringe Wasseraufnahme

verbinden, ohne andererseits die erwünschten Qualitäten der Ausgangs-Komponenten einzubüßen. Als besonders interessant konnten alle sich eröffnenden Möglichkeiten für den Einsatz an sich bekannter und handelsgängiger Copolymerisate gelten.

Es wurde nun gefunden, daß überraschenderweise auch Methylmethacrylatreiche Copolymerisate vom MMA-Styrol-Maleinsäureanhydrid-Typ mit Styrol-Acrylnitril-Copolymerisaten verträgliche Mischungen bilden. Die Erfindung betrifft somit Polymermischungen PM bestehend aus

A) Copolymerisaten aus:

| a1) 50 - 99 Gew.-% | Alkylmethacrylaten mit 1 - 10 Kohlenstoffatomen im Alkylrest |
| a2) 0,5- 20 Gew.-% | Maleinsäureanhydrid |
| a3) 0,5- 40 Gew.-% | gegebenenfalls mit Alkylresten mit 1 bis 4 Kohlenstoffatomen substituierten Vinylaromaten |

zu 0,5 bis 99,5 Gew.-% bezogen auf die Gesamtheit von PM, und

B) Copolymerisate aus:

| b1) 99,5 - 50 Gew.-% | Styrol und/oder $\alpha$-Methylstyrol |
| b2) 0,5 - 50 Gew.-% | Acrylnitril und/oder Methacrylnitril |

zu 99,5 bis 0,5 Gew.-% bezogen auf die Gesamtheit von PM.

Als Alkylmethacrylat al) ist insbesondere das Methylmethacrylat zu nennen. Im Sinne der vorliegenden Erfindung seien darunter auch Cycloalkylmethacrylate insbesondere Cyclohexyl-, daneben auch Cyclopentyl-und Cycloheptyl- und Cyclooctyl-methacrylat verstanden. Gegebenenfalls können auch Copolymerisate verschiedener Methacrylsäureester vorliegen. Vorzugsweise liegt der Anteil der Alkylmethacrylate al) in A) bei > 65 und bis 95, insbesondere bei 75 ± 5 Gew.-%. Der Anteil der Monomerkomponente a2) liegt bevorzugt bei 1 - 15 Gew.-%, insbesondere bei ca. 10 ± 5 Gew.-%. Als Vinylaromaten im Sinne der vorliegenden Erfindung seien insbesondere Styrol sowie $\alpha$-Methylstyrol verstanden, die gegebenenfalls mit einem bis zwei Substituenten, vorzugsweise Alkylsubsituenten, insbesondere C1-C4-Alkylresten substituiert sein können.

Vorzugsweise liegt der Anteil der Monomerkomponente a3) bei 1 - 30 Gew.-%, insbesondere bei 5 - 25 Gew.-%, ganz besonders bei 15 ± 5 Gew.-%. Im allgemeinen liegen die Copolymeren unter A) im Molekulargewichtsbereich $2 \cdot 10^4$ bis $10^6$ Dalton.

Die Herstellung von Copolymerisaten vom Typ der Polymerkomponenten A) ist an sich bekannt (NL-A 66-05 289, DE-A 12 31 013, DE-A 12 98 272, DE-A 36 31 826, JP-A 85/147 417). Sie geschieht durch radikalische Polymerisation in Substanz, in Lösung oder - weniger vorteilhaft wegen der Hydrolysentendenz des Maleinsäureanhydrids - als Perlpolymerisation. Als Copolymerisate unter A) können zweckmäßig handelsübliche Produkte eingesetzt werden, beispielsweise solche mit einer Zusammensetzung Methylmethacrylat-Styrol-Maleinsäureanhydrid im Gew.-Verhältnis 75 : 15 : 10 (PLEXIGLAS ® HW55) oder solche mit einer Zusammensetzung Methylmethacrylat-$\alpha$-Methylstyrol-Maleinsäureanhydrid im Gew.-Verhältnis 77 : 15 : 8 (PLEX®8707).

Die Copolymerisate unter B) können ebenfalls in ihrer Zusammensetzung in gewissen Grenzen variiert werden. Vorzugsweise liegt der Anteil der Styrol- bzw. $\alpha$-Methylstyrolmonomeren im Bereich 90 - 60 Gew.-%, insbesondere bei 75 ± 5 Gew.-%.

Die Copolymerisate vom Typ der Polymerkomponenten B) sind bekannt bzw. sind nach bekannten Verfahren erhältlich (Ullmann's Encyclopädie der Techn. Chemie, 4. Aufl. Bd. 19, 272 - 277, Verlag Chemie 1989; H.F. Mark et al. Encyclopedia of Polymer Science and Engineering 2nd Ed. Vol, 16, 72 - 74, Vol. 1, 452 - 464, Wiley 1989). Ihre Herstellung wird gewöhnlich als radikalische Polymerisation nach allen bekannten Polymerisationsverfahren, z.B. als Masse- oder Lösungspolymerisation oder - weniger günstig - in Suspension vorgenommen. Die Molgewichte liegen i.A. im Bereich $2 \cdot 10^4$ bis $10^6$ Dalton.

Auch hier bietet sich vorteilhafterweise die Verwendung von handelsüblichen Produkten, insbesondere vom SAN-Typ (DIN 7728) an. Genannt seien z.B. Copolymerisate aus 75 Gew.-Teilen Styrol und 25 Gew.-% Acrylnitril (LURAN 368R). Die Komponenten der Polymermischungen PM der vorliegenden Erfindung sind wie bereits ausgeführt-verträglich (kompatibel) und zwar in allen untersuchten Verhältnissen. Bevorzugt werden Gewichtsverhältnisse von A) zu B) wie 75/25 bis 25/75.

Kriterien der Verträglichkeit

Im Sinne der vorliegenden Erfindung und im Einklang mit den in der Praxis der Polymerchemie üblichen Vorstellungen sollen unter verträglichen Mischungen stabile, homogene Mischungen verstanden werden, die makroskopisch die Eigenschaften eines **einphasigen** Materials aufweisen. (Vgl. Kirk-Othmer, Vol. 18, pg. 446, 457 - 60; J. Brandrup & E.H. Immergut, "Polymer Handbook", 2nd Ed. III - 211, Wiley Interscience 1975; 3rd. Ed. VI/247, J. Wiley 1989).

Als Kriterien für die Verträglichkeit (Kompatibilität) seien - im Einklang mit den Standardtexten - betrachtet:
I) Die Beobachtung der Glastemperatur Tg.
Sofern die Polymerkomponenten Glastemperaturen besitzen, die weit genug auseinanderliegen um durch "Differential Scanning Calorimetry" (DSC), dilatometrisch, dielektrisch oder radioluminiszenzspektroskopisch unterschieden zu werden, zeigt sich vorhandene Verträglichkeit durch eine Verschiebung oder durch das Verschwinden der Tg's der Polymer-Einzel-Komponenten an. (Vgl. Olabisi et al. in Polymer-Polymer-Miscibility, loc.cit. pp 21, 123).
II) Die "optische Methode"
Dabei wird aus einer homogenen Lösung der Polymerkomponenten ein Film ausgegossen, der nach dem Trocknen auch bei Vergrößerung keine optisch wahrnehmbare Inhomogenität aufweisen darf.
Die Polymermischungen PM gemäß der vorliegenden Erfindung besitzen nach allen vorliegenden Erfahrungen durchgängig eine einheitliche Glastemperatur Tg und sind transparent.

Herstellung der Mischungen PM

Die verträglichen Mischungen PM können durch die unterschiedlichen Verfahren hergestellt werden. Sie werden z.B. durch intensives mechanisches Vermischen der Komponenten A) und B) in der Schmelze, im Extruder, Kneter usw. erzeugt, oder sie können auch aus einem gemeinsamen Lösungsmittel heraus als sogenannte "solution cast polyblends" hergestellt werden (vgl. Kirk-Othmer "Encyclopedia of Chemical Technology" 3rd Ed. Vol. 18, pg. 442 - 478, J. Wiley 1982). Man erzeugt in der Regel zunächst Mischungen der Komponenten A) und B), wobei vorteilhaft von Feststoffen in Form beispielsweise eines Granulats ausgegangen wird unter Verwendung langsam laufender Mischaggregate wie z.B. Trommel-, Rhönrad-, Doppelkammer-Pflugscharmischern. Die langsam laufenden Mischaggregate verursachen ein mechanisches Mischen, ohne daß die Phasengrenzen aufgehoben werden (vgl. Ullmanns Encyklopädie der Technischen Chemie, 4. Auflage, Bd. 2, pg. 282 - 311, Verlag Chemie). Anschließend erfolgt die thermoplastische Aufbereitung durch homogenes Mischen in der Schmelze unter Verwendung von heizbaren Mischaggregaten bei den dafür geeigneten Temperaturen, z.B. 150 bis unterhalb ca. 300 Grad C in Knetern wie dem Brabender-Kneter oder vorzugsweise Extrudern, z.B. Ein- oder Mehrschneckenextrudern oder gegebenenfalls in Extrudern mit oszillierender Schnecke und Scherstiften (z.B. im BUSSCO-Kneter). Beim Schmelzmischen ist auf jeden Fall darauf zu achten, daß die Schmelze nicht allzu hohen Temperaturen (T > 300 Grad C) ausgesetzt wird, da die Polymerlegierung zur Gelbfärbung neigt. Man kann nach diesen Verfahren Gleichkorngranulate (z.B. Heißabschlag, Würfelform, Rundkorn) herstellen. Die Korngröße der Granulate liegt dabei im Bereich 2 bis 5 mm.

Vorteilhafte Wirkungen

Die Polymermischungen PM gemäß der vorliegenden Erfindung entsprechen weitgehend den genannten Forderungen der Technik. Die Vorteile, welche diese Polymermischungen bieten, seien anhand der Mischungen PM2 (vgl. Beispiele 1 - 3 im Vergleich mit der reinen Formmassen-Komponente (Copolymerisat aus MMA/Maleinsäureanhydrid/Styrol, Beispiel 4) dargestellt. Man beobachtet:
- deutliche Reduktion der Schmelzviskosität
- deutliche Verringerung der Wasseraufnahme bei Sättigung
- keine bzw. nur geringfügige Einbußen bei der Wärmeformbeständigkeit (VST-B) und der mechanischen Eigenschaften (Schlagzähigkeit SZ, Kerbschlagzähigkeit KSZ)
Besonders vorteilhaft ist die Möglichkeit, zu transparenten Formkörpern aus den Polymermischungen PM zu gelangen. Weiter bieten die Polymermischungen PM die Möglichkeit Verbunde herzustellen, beispielsweise ein- oder mehrlagige Schichten im Verbund mit - gegebenenfalls schlagzähmodifizierten - Polyalkylmethacrylaten (vgl. Th. Völker, H. Rauch-Puntigam, Acryl- und Methacrylverbindungen, Springer Verlag 1967) und/oder den Copolymerisaten A bzw. B.

Eine weitere Ausgestaltung der Erfindung liegt in der Möglichkeit, die Schlagzäheigenschaften der Polymermischungen PM durch weitere Zusätze noch zu verbessern.

Dazu gehört der Zusatz von Rubber-modifizierten Styrol-Copolymerisaten RP beispielsweise vom Typ Acrylnitril-Butadien-Styrol-Kautschuk (ABS, vgl. DIN 16772), insbesondere von transparentem ABS-Kautschuk (vgl. Ullmann loc.cit., Bd. 19, S. 277 - 279, H.F. Mark et al. loc.cit. Vol. 1, 388 - 395). Der Einfluß der elastomeren Mischungskomponente auf das Gesamtsystem läßt sich anhand der bekannten mechanischen und optischen Eigenschaften derartiger Elastomerer in etwa abschätzen. Der Anteil der Rubber-modifizierten Copolymerisate RP liegt gewöhnlich bei 0,5 bis 99,5 Gew.-Teilen bezogen auf das Gesamtsystem PM + RP).

Die damit erreichten Wirkungen seien anhand eines transparenten ABS-Handelsprodukts (ABS TERLURAN TR 2802) näher erläutert.

Eine Polymermischung PM gemäß Beispiel 6 der nachfolgend beschriebenen Beispiele liegt im Haze-Wert sogar besser als die unmodifizierte ABS-Komponente selbst. Desweiteren sind folgende Eigenschaften hervorzuheben:

- erhöhte Wärmeformbeständigkeit im Vergleich zur ABS-Komponente alleine
- erhöhter E-Modul im Vergleich zur ABS-Komponente

Gegenüber Abmischungen aus den Polymerkomponenten A) und B) haben die obengenannten Polymermischungen den Vorteil höherer Schlagzähigkeit und vor allem höherer Lichttransmission.

Von besonderem technischen Interesse sind ferner Verbundmaterialien auf Basis der Polymermischungen PM mit geeigneten von PM verschiedenen Kunststoff-Schichtmaterialien.

Erwähnt seien beispielsweise Verbundmaterialien, die mindestens eine ein- oder mehrlagige (bis zu 10 Lagen) Schicht, gebildet aus einerseits den Polymermischungen PM und andererseits Schichten aus gegebenenfalls schlagzäh modifizierten Copolymerisaten SC ausgewählt aus der Gruppe von Kunststoffen auf Polyacrylat- und/oder Styrol-Basis, mit der Maßgabe, daß die Copolymerisate SC von A) und B) verschieden sind, bilden. Diese Copolymerisate SC können z.B. Polyacrylate darstellen (vgl. Houben-Weyl, 4. Auflage, Bd. E20, S. 1141 - 1229, Georg Thieme Verlag, New York 1987; H.F. Mark et al. Encyclopedia of Polymer Science and Engineering 2nd Ed., Vol. 1, pg. 234 - 334, John Wiley 1985). Genannt seien z.B. Mischungen aus Polymethylmethacrylat und mit Methylmethacrylat gepfropften Elastomerphasen wie z.B. vernetztes Polybutylacrylat.

Die nachfolgenden Beispiele dienen zur Erläuterung der Erfindung. Dabei finden die folgenden Begriffe Anwendung:

| Abk. | Einheit | Bedeutung | Norm |
|------|---------|-----------|------|
| VST-B | (Grad C) | Wärmeformbeständigkeit nach VICAT | DIN 53 461 Verf. B |
| HDT-A | (Grad C) | Heat Distortion Temp. | ISO R75 |
| SZ | $(KJm^{-2})$ | Schlagzähigkeit | DIN 53 453 |
| KSZ | $(KJm^{-2})$ | Kerbschlagzähigkeit | DIN 53 453 |
| E-Modul | (M Pa) | Elastizitätsmodul | DIN 53 457 |
| $E_R$ | (%) | Reißdehnung | DIN 53 455 |
| SWA | (%) | Sättigungswasseraufnahme 72d, 23 Grad C | DIN 53 427 |
| $\eta_s 220/5$ | (Pa.s) | Spez. Viskosität | |
| | (%) | Haze | ASTM D 1003 |

EP 0 457 147 B1

BEISPIELE

Beispiele 1 - 5

Die in der nachfolgenden Tabelle angeführten Mischungen wurden aus den Mischungskomponenten auf einem 35 mm-Storck-Mischextruder bei 220 - 250 Grad C compoundiert und und granuliert; der Spritzguß erfolgte auf einer Battenfeld-Spritzgießmaschine BA 350-CD bei 250 Grad C. Als Mischungskomponenten wurden A1: ein Copolymer aus Methylmethacrylat-Maleinsäureanhydrid-Styrol der Zusammensetzung 75-10-15 (PLEXIGLAS ® HW55 (Röhm)) und B1: Styrol-Acrylnitril-Copolymer der Zusammensetzung 75 - 25 (Luran ® 368 (BASF)) eingesetzt.

Im Vergleich zu reinem A1 (Vergleichsbeispiel 4) weisen die unter Beispiel 1 - 3 angeführten Mischungen eine deutliche Reduktion der Schmelzeviskosität und damit eine bessere Verarbeitbarkeit im Spritzguß sowie eine deutliche Verringerung der Wasseraufnahme bei Sättigung bei nur sehr geringfügigen Einbußen in Wärmeformbeständigkeit und mechanischen Eigenschaften (Schlag- und Kerbschlagzähigkeit, E-Modul) auf.

| Blend/ Eigenschaften | Beisp. 1 | Beisp. 2 | Beisp. 3 | Beisp. 4 | Beisp. 5 |
|---|---|---|---|---|---|
| | | | | (Vergleichsbeispiele) | |
| Anteile A1 | 75 | 50 | 25 | 100 | 0 |
| B1 | 25 | 50 | 75 | 0 | 100 |
| Vicat-B (°C) | 120 | 116 | 112 | 121 | 106 |
| Schlagzähigkeit (23 °C, $kJm^{-2}$) | 21 | 21 | 20 | 10 | – |
| Kerbschlagzähigkeit (23°C, $kJm^{-2}$) | 1,6 | 1,7 | 1,6 | 2,0 | 1,9 |
| $n_s$ 220/5 (Pa.s) | 2980 | 1930 | 1250 | 4000 | 1050 |
| SWA (%) | 1,37 | 1,00 | 0,74 | 2,10 | 0,58 |

Beispiele 6 - 8

Die in der nachfolgenden Tabelle angeführten Mischungen wurden gemäß den Beispielen 1 - 5 compoundiert, granuliert und spritzgegossen.

Als Mischungskomponenten wurden A1 und SC1:
Methylmethacrylat-modifiziertes Acrylnitril-Butadien-Styrol-Terpolymerisat der Zusammensetzung Methylmethacrylat/Acrylnitril/Styrol/Butadien = 37/7/42/14 (TERLURAN TR 2802 (BASF)) eingesetzt.

Die unter den Beispielen 6 und 7 angeführten Mischungen weisen gegenüber reinem SC1 eine deutlich höhere Wärmeformbeständigkeit (Vicat-B und HDT-A), einen deutlich höheren E-Modul und einen niedrigeren Haze-Wert (und damit verbunden eine höhere Transparenz) auf. Demgegenüber stehen vertretbare Einbußen in der (Kerb)-Schlagzähigkeit und in der Reißdehnung. Die deutlich höhere Schmelzviskosität ist auf den Einsatz eines höherviskosen A1-Typs, der in seinen übrigen Eigenschaften dem A1-Typ entspricht, der in den Beispielen 1 - 4 eingesetzt wurde, zurückzuführen.

6

| Blend/Eigenschaften | | Beisp. 6 | Beisp. 7 | Beisp. 8 (Vergleichsbeisp.) |
|---|---|---|---|---|
| Anteile | SC1 | 50 | 25 | 100 |
| | B1 | 20 | 30 | - |
| | A1 | 30 | 45 | - |
| Vicat-B ($^\circ$C) | | 112 | 115 | 100 |
| HDT-A ($^\circ$C) | | 85 | 88 | 73 |
| Schlagzähigkeit | (23$^\circ$C, kJm$^{-2}$) | 34,7 | 28,2 | 77,3 |
| | (-20$^\circ$C) | 26,3 | 23,7 | 80,3 |
| Kerbeschlagzähigkeit | (23$^\circ$C, kJm$^{-2}$) | 2,1 | 1,8 | 4,3 |
| | (-20$^\circ$C) | 1,7 | 1,5 | 2,6 |
| E-Modul (MPa) | | 2760 | 3140 | 2000 |
| Reißdehnung (%) | | 15,7 | 6,6 | 10,1 |
| $n_s^{220/5}$ (Pa.s) | | 6320 | 4430 | 2310 |
| Haze (%) | | 1,9 | 1,6 | 2,9 |

## Patentansprüche

1. Verträgliche Polymermischungen PM bestehend aus:
   A) Copolymerisaten aus:
   - a1) 50 - 99 Gew.-%     Alkylmethacrylaten mit 1 - 10 Kohlenstoffatomen im Alkylrest
   - a2) 0,5- 20 Gew.-%     Maleinsäureanhydrid -Einheiten
   - a3) 0,5- 40 Gew.-%     gegebenenfalls mit Alkylresten mit 1 bis 4 Kohlenstoffatomen substituierten Vinlyaromaten
   
   zu 0,5 bis 99,5 Gew.-% bezogen auf die Gesamtheit von PM, und
   B) Copolymerisate aus:
   - b1) 99,5 - 50 Gew.-%     Styrol und/oder $\alpha$-Methylstyrol
   - b2) 0,5 - 50 Gew.-%     Acrylnitril und/oder Methacrylnitril
   
   zu 99,5 bis 0,5 Gew.-% bezogen auf die Gesamtheit von PM.

2. Polymermischungen PM gemäß Anspruch 1, dadurch gekennzeichnet, daß sie zusätzlich zu der Mischung aus den Copolymerisaten unter A) und B) noch weitere, schlagzäh-modifizierte Styrol-Copolymerisate RP enthalten.

3. Polymermischungen gemäß Anspruch 2, dadurch gekennzeichnet, daß sie 0,5 - 99,5 Gew.-Teile der Polymermischungen PM und zusätzlich 99,5 bis 0,5 Gew.-Teile Styrolcopolymerisate RP enthalten wobei die Summe aus PM und RP 100 Gew.-Teile betragen soll.

4. Polymermischungen gemäß den Ansprüchen 2 und 3, dadurch gekennzeichnet, daß als Styrolcopolymerisate RP transparente ABS-Typen eingesetzt werden.

5. Transparente Formkörper bestehend aus den Polymermischungen PM gemäß Anspruch 1.

6. Transparente Formkörper bestehend aus den Polymermischungen PM und RP gemäß den Ansprüchen 2 bis 4.

7. Verbundmaterialien, dadurch gekennzeichnet, daß sie mindestens eine ein- oder mehrlagige Schicht gebildet aus den Polymermischungen PM gemäß Anspruch 1 im Verbund mit einem gegebenenfalls schlagzäh-modifizierten Copolymerisat SC ausgewählt aus der Gruppe von Kunststoffen auf Polyacrylat- oder Styrolbasis, gegebenenfalls modifiziert durch schlagzäh-modifizierende Comonomere mit der Maßgabe, daß die Copolymerisate SC von A) und B) verschieden sind, enthalten.

# EP 0 457 147 B1

8. Verbundmaterialien gemäß Anspruch 7, dadurch gekennzeichnet, daß die Polymermischungen PM im Verbund mit einer gegebenenfalls schlagzäh modifizierten Polyalkyl(meth)acrylat-Schicht angeordnet sind.

9. Verbundmaterialien gemäß Anspruch 7 und 8, dadurch gekennzeichnet, daß die Polymermischungen PM im Verbund mit einem Copolymerisat A) gemäß Anspruch 1 angeordnet sind.

10. Verbundmaterialien gemäß Anspruch 7, dadurch gekennzeichnet, daß die Polymermischungen PM im Verbund mit einem Copolymerisat B) gemäß Anspruch 1 angeordnet sind.

## Claims

1. Compatible polymer mixtures PM consisting, in an amount of 0.5 to 99.5 wt.% based on the total amount of PM, of:
   A) Copolymers synthesised from
     a1) 50 - 99 wt.%     of alkylmethacrylates having 1 to 10 carbon atoms in the alkyl group
     a2) 0.5 - 20 wt.%     of maleic acid anhydride
     a3) 0.5 - 40 wt.%     of vinyl aromatic substances optionally substituted with $C_{1-4}$-alkyl groups, and,
   in an amount of 99.5 to 0.5 wt.% based on the total amount of PM, of:
   B) Copolymers synthesised from
     b1) 99.5 - 50 wt.%     of styrene and/or $\alpha$-methylstyrene
     b2) 0.5 - 50 wt.%     of acrylonitrile and/or methacrylonitrile.

2. Polymer mixtures PM according to claim 1,
   characterised in that, in addition to the mixture of copolymers listed under A) and B), they also contain further styrene copolymers RP with a modified impact resistance.

3. Polymer mixtures according to claim 2,
   characterised in that they contain 0.5 to 99.5 parts by weight of polymer mixtures PM and additionally 99.5 to 0.5 wt.% of styrene copolymers RP, with the total PM plus RP having to equal 100 parts by weight.

4. Polymer mixtures according to claims 2 and 3, characterised in that transparent ABS-types are used as styrene copolymers RP.

5. Transparent moulded bodies consisting of polymer mixtures PM according to claim 1.

6. Transparent moulded bodies consisting of polymer mixtures PM and RP according to claims 2 to 4.

7. Composite materials, characterised in that they contain at least a single- or multi-component layer formed from the polymer mixtures PM according to claim 1, which is bonded to an optionally impact strength-modified copolymer SC selected from the group of plastics based on polyacrylate or styrene, optionally modified by impact strength-modified comonomers, with the proviso that the copolymers SC of A) and B) are different.

8. Composite materials according to claim 7, characterised in that the polymer mixtures PM are in a compound arrangement with an optionally impact-strength modified polyalkyl(meth)acrylate layer.

9. Composite materials according to claims 7 and 8, characterised in that the polymer mixtures PM are in a compound arrangement with a copolymer A) according to claim 1.

10. Composite materials according to claim 7, characterised in that the polymer mixtures PM are in a compound arrangement with a copolymer B) according to claim 1.

**Revendications**

1. Mélanges de polymères compatibles PM, se composant de
   A) copolymères de
   $a_1$) 50 - 99%   en poids de méthacrylates d'alkyle à 1-10 atomes de carbone dans le reste alkyle,
   $a_2$) 0,5 - 20%   en Poids de motifs anhydride maléique,
   $a_3$) 0,5 - 40%   en poids de composes vinylaromatiques éventuellement substitues par des restes alkyle à 1-4 atomes de carbone,
   à raison de 0,5 à 99,5% en poids par rapport à la totalité de PM, et de
   B) copolymères de
   $b_1$) 99,5 - 50%   en poids de styrène et/ou d'$\alpha$-mèthylstyrene,
   $b_2$) 0,5 - 50%   en poids d'acrylonitrile et/ou de methacrylonitrile,
   à raison de 99,5 à 0,5% en poids par rapport à la totalite de PM.

2. Melanges de polymeres PM selon la revendication 1, caractérisés en ce qu'ils contiennent encore, en plus du mélange des copolymères A) et B), d'autres copolymères du styrène modifiés dans le sens de la résilience RP.

3. Mélanges de polymères selon la revendication 2, caractérisés en ce qu'ils contiennent 0,5 à 99,5 parties en poids des mélanges de polymères PM et, en plus, 99,5 a 0,5 parties en poids de copolymères de styrène RP, la somme de PM et de RP s'élevant à 100 parties en poids.

4. Mélanges de polymères selon la revendication 2 ou 3, caractérisés en ce que des types d'ABS transparents sont utilisés comme copolymères de styrène RP.

5. Corps moulés transparents, composés des mélanges de polymères PM selon la revendication 1.

6. Corps moulés transparents, composés des mélanges de polymères PM et RP selon l'une quelconque des revendications 2 à 4.

7. Matériaux composites, caractérises en ce qu'ils contiennent au moins une épaisseur mono- ou multicouche formée des mélanges de polymères PM selon la revendication 1, en liaison avec un copolymère SC éventuellement modifie dans le sens de la résilience, choisi dans le groupe des matières plastiques à base de polyacrylate ou de styrène, éventuellement modifiées par des comonomères modifiant la résilience, étant spécifié que les copolymères SC sont différents de A) et de B).

8. Matériaux composites selon la revendication 7, caractérisés en ce que les mélanges de polymères PM sont disposés en liaison avec une couche de poly(méth)acrylate d'alkyle eventuellement modifié dans le sens de la résilience.

9. Matériaux composites selon la revendication 7 ou 8, caractérisés en ce que les mélanges de polymères PM sont disposes en liaison avec un copolymère A) selon la revendication 1.

10. Matériaux composites selon la revendication 7, caractérises en ce que les mélanges de polymères PM sont disposés en liaison avec un copolymère B) selon la revendication 1.